Europäisches Patentamt

European Patent Office

Office européen des brevets

(11) Veröffentlichungsnummer: **0 243 875 B1**

# EUROPÄISCHE PATENTSCHRIFT

(45) Veröffentlichungstag der Patentschrift:
21.08.91 Patentblatt 91/34

(51) Int. Cl.$^5$: **B29C 45/14**, H02K 15/12

(21) Anmeldenummer: 87105934.1

(22) Anmeldetag: 23.04.87

(54) Verfahren sowie Spritzgusswerkzeug zur Herstellung eines Rotors für Elektromotoren.

(30) Priorität: 24.04.86 DE 3613842

(43) Veröffentlichungstag der Anmeldung:
04.11.87 Patentblatt 87/45

(45) Bekanntmachung des Hinweises auf die
Patenterteilung:
21.08.91 Patentblatt 91/34

(84) Benannte Vertragsstaaten:
AT CH DE FR IT LI

(56) Entgegenhaltungen:
FR-A- 1 341 788
FR-A- 1 508 135
FR-A- 2 391 832
GB-A- 2 003 674
US-A- 3 254 372

(56) Entgegenhaltungen:
US-A- 4 663 835
PATENT ABSTRACTS OF JAPAN, Band 8, Nr.
88 (E-240)[1525], 21. April 1984; & JP-A-59 6752
(MATSUSHITA DENKI SANGYO K.K.) 13-
01-1984
PATENT ABSTRACTS OF JAPAN, Band 5, Nr.
51 (E-51)[723], 10. April 1981; & JP-A-56 1754
(SONY K.K.) 09-01-1981

(73) Patentinhaber: Langbein, Reinhold
W-7989 Amtzell-Schattbuch (DE)

(72) Erfinder: Langbein, Reinhold
W-7989 Amtzell-Schattbuch (DE)

(74) Vertreter: Patentanwälte Dipl.-Ing. E. Eisele
Dr.-Ing. H. Otten
Seestrasse 42
W-7980 Ravensburg (DE)

## Beschreibung

Die Erfindung betrifft ein Verfahren sowie ein Spritzgußwerkzeug zur Herstellung eines Rotors für Elektromotoren nach dem Oberbegriff der Ansprüche 1 sowie 4.

Bekannte Rotoren der eingangs erwähnten Art werden durch Spritzgießen mittels Thermoplasten hergestellt. Hierzu wird das Blechpaket mit der dieses durchdringenden Rotorwelle in eine Spritzguß-Werkzeugform eingebettet, wobei zusätzliche Einsätze zur Trennung einzelner, bezüglich der Rotorwelle radialer Ebenen vorgesehen sind. Der Angußkanal für die Kunststoffummantelung des Rotors liegt dabei in axialer Entfernung vom Blechpaket im Bereich der Rotorwelle.

Diese Technik ist bei Thermoplasten mit schnellen Aushärtzeiten und hoher Zähigkeit durchaus anwendbar. Die Verwendung von Duroplasten als Spritzmaterial hat demgegenüber den Vorteil, daß hierdurch eine bessere elektrische Isolation, eine höhere mechanische Stabilität sowie eine höhere Warmformbeständigkeit mit besseren Heißlaufeigenschaften erzielt werden. Es ist jedoch nicht ohne weiteres möglich, mit gleichen Verfahren, wie bei der Verarbeitung von Thermoplasten, auch Duroplaste zu verarbeiten. Duroplaste werden deshalb in allgemeinen durch Spritzpressen, d. h. mit einem anderen Verfahren verarbeitet. Dies liegt u. a. daran, daß der Widerstand des Duroplasts beim Verarbeiten wesentlich größer ist als bei Thermoplasten, so daß die üblichen Fließwege des Kunststoffes nicht eingehalten werden können.

Der Erfindung liegt die Aufgabe zugrunde, ein Verfahren sowie ein zugehöriges Spritzgußwerkzeug zur wirtschaftlichen und funktionellen Herstellung eines mit Spritzgußmasse umgebenen Rotors für Elektromotoren vorzuschlagen, mit welchem sowohl Duroplast als auch Thermoplast verarbeitet werden kann.

Diese Aufgabe wird ausgehend von einem Verfahren bzw. einem Spritzgußwerkzeug der einleitend bezeichnenden Art durch die kennzeichnenden Merkmale der Ansprüche 1 und 4 gelöst.

Durch die in den weiteren Unteransprüchen aufgeführten Maßnahmen sind Weiterbildungen und Verbesserungen der Erfindung möglich.

Die Erfindung hat gegenüber der bisherigen Methode den Vorteil, daß die Ummantelung bzw. Umspritzung von Rotoren auch mit Duroplasten erfolgen kann. Hierdurch ergeben sich die einleitend beschriebenen Vorteile der besseren Durchschlagsfestigkeit, der höheren mechanischen Stabilität und der besseren Warmformbeständigkeit des Rotors. Dies wird erfindungsgemäß dadurch erzielt, daß die Anspritzung von außen her über einen Ringkanal direkt auf die Rippen erfolgt, d. h. es werden zusätzliche Einsätze und damit lange Fließwege der Spritzgußmasse vermieden. Durch die nahezu symmetrische Beaufschlagung der angußnahen Rippen über den im Querschnitt großen Ringkanal sowie durch das direkte Weiterleiten der Spritzgußmasse im axialen Ringspalt um die Rotorwelle mit anschließender radialer Ausbreitung längs den Rippen des Blechpakets im angußfernen Bereich werden kürzeste Fließwege erzielt. Hierdurch können auch die höheren Gießwiderstände des Duroplasts überwunden werden.

Die Erfindung hat den Vorteil, daß sowohl der Ringkanal mit dem Spritzgußmasse zuführenden Angußtunnel sowie die radialen Angußkanäle für die Kunststoff-Rippenstege in einer Werkzeug-Trennebene des Spritzgußwerkzeugs liegen und damit werkzeugtechnisch leicht herstellbar sind. Der die Spritzgußmasse zuführende Ringkanal muß möglichst nah an die herzustellende Rotorummantelung angeordnet sein. Erfindungsgemäß befindet sich der Ringkanal deshalb innerhalb der Trennebene zur angußnahen Stirnseite des Blechpakets.

Die weitere Werkzeug-Trennebene liegt erfindungsgemäß in der radialen Stirnflächenebene des angußfernen Bereichs des Blechpakets. Dies ist erforderlich, um den hergestellten Rotor mit seinen angespritzten sternförmigen Kunststoff-Rippen dem Spritzgußwerkzeug entnehmen zu können.

Vorteilhaft ist weiterhin, daß Entlüftungskanäle in jeder zweiten Rippe des angußfernen Bereichs der Rippen-Angußkanäle vorgesehen sind. Die Anzahl und die Lage der Entlüftungskanäle muß je nach Spritzgußform optimiert werden.

Die Erfindung läßt sich sowohl für Duroplast als auch für Thermoplast verwenden. Sie ist jedoch insbesondere für die Verwendung von Duroplast konzipiert.

Als weiterer Vorteil der Erfindung ist anzusehen, daß der Strömungsweg der Spritzgußmasse optimiert ist. Dabei sollen möglichst wenig Angußtunnel zwischen herzustellender Kunststoffummantelung und Spritzgußmasse-Zuführkanäle vorhanden sein. Hierdurch wird die Nacharbeit nach dem Entformen auf ein Minimum reduziert.

Die Beschickung der einzelnen Spritzgußformen findet vorteilhafterweise in zeitlich abgestimmter Form mit dem Spritzgießvorgang selbst statt. Hierdurch kann der beim Duroplast notwendige längere Aushärtvorgang mit dem Arbeitsvorgang kombiniert werden.

Weitere Einzelheiten der Erfindung sowie ein vorteilhaftes und zweckmäßiges Ausführungsbeispiel sind in der Zeichnung dargestellt und in der nachfolgenden Beschreibung näher erläutert. Es zeigen

Fig. 1 eine Seitenansicht mit einem erfindungsgemäßen Rotor, eingebettet in einem Spritzgußwerkzeug und

Fig. 2 einen Schnitt entlang der Trennlinie I-I nach Fig. 1,

Fig. 3 einen Querschnitt durch das Blechpaket in verkleinerter Form.

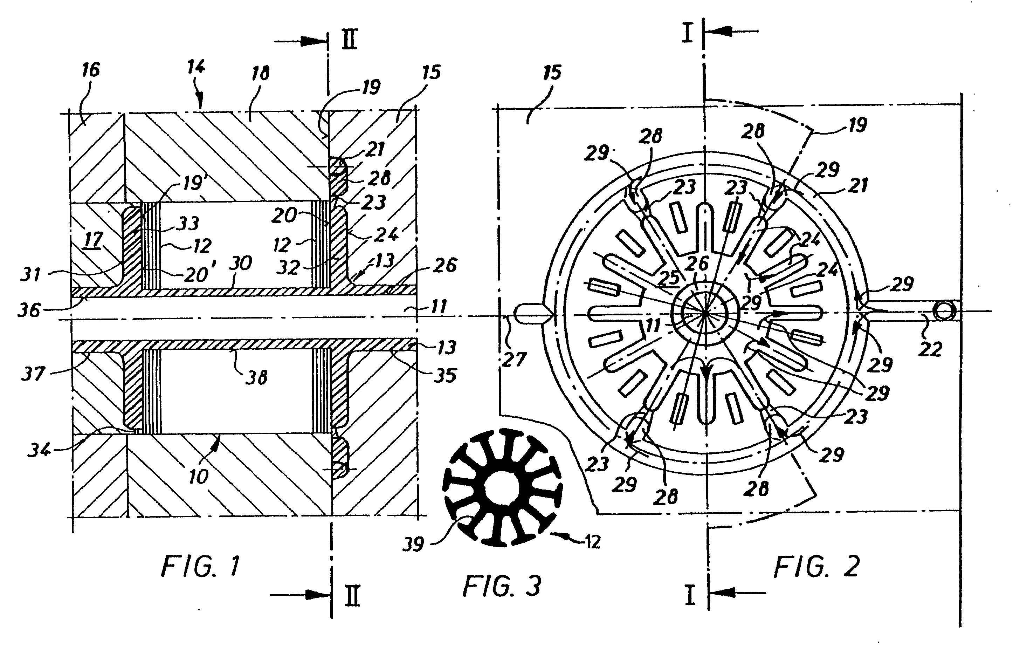

Ein in der Fig. 1 dargestellte herzustellende Rotor (10) besteht aus einer Rotorwelle (11) die ein Blechpaket (12) mit dem in Fig. 3 dargestellten Querschnitt durchdringt. Eine Ummantelung der Rotorwelle (11) sowie des Blechpakets (12) mit der in der Fig. 1 dunkel dargestellten Spritzgußmasse (13) geschieht in einer Spritzgußform (14), wobei die Spritzgußform (14) mehrteilig ausgeführt ist. Dies sind insbesondere ein stirnseitiger Formeinsatz (15) im angußnahen Bereich sowie ein stirnseitiger Formeinsatz (17) im angußfernen Bereich, sowie ein zylindrisches Formteil (18) im Bereich des Blechpakets (12) und der Anschlußflansch (16).

Die in der Fig. 1 dargestellte Werkzeug-Trennebene (19) entlang der Trennlinie II-II liegt in der angußnahen Stirnebene (20) des Blechpakets (12). Der an diesen Bereich angrenzende stirnseitige Formeinsatz (15) ist in Fig. 2 in der Blattebene dargestellt.

Erfindungsgemäß weist der stirnseitige Formeinsatz (15) für den angußnahen Bereich einen in der Trennebene (19) liegenden Ringkanal (21) auf. Die Zufuhr der Spritzgußmasse erfolgt über einen Angußtunnel (22), der ebenfalls in der Trennebene (19) liegt.

In der Fig. 2 ist der aus Fig. 1 durch die Werkzeug-Trennebene (19) (Schnitt II-II) geführte Schnitt mit Schnitt I-I gekennzeichnet. Dieser führt vom Ringkanal (21) durch einen Angußkanal (23) zu radialen Rippenkanälen (24). Der innere Bereich der radialen Rippenkanäle (24) wird durch eine zylindrische Aussparung (25) im stirnseitigen Formeinsatz (15) gebildet, mit sich anschließendem Ringspalt (26) zwischen Rotorwelle (11) und Formeinsatz (15).

Vom Ringkanal (21) ausgehend sind vier bezüglich einer Mittelachse (27) symmetrisch angeordnete Angußöffnungen (28) mit den Angußkanälen (23) zu den radialen Rippenkanälen (24) vorgesehen. Selbstverständlich können weitere derartige Zuführkanäle (28, 23) zu den radialen Rippenkanälen (24) vorhanden sein.

Wie aus der Fig. 1 und Fig. 2 im Zusammenhang ersichtlich, strömt die Spritzgußmasse (13) über den Angußtunnel (22) in den Ringkanal (21) und von dort aus über die Angußöffnungen (28) sowie die Angußkanäle (23) in die radialen Aussparungen der Rippenkanäle (24) des angußnahen stirnseitigen Formeinsatzes (15). Der sehr enge Angußkanal (23) stellt die spätere Trennstelle zwischen fertigem Gußteil und Formwerkzeug dar.

Wie aus Fig. 1 weiterhin ersichtlich, fließt die Spritzgußmasse (13) vom Ringkanal (21) kommend, zunächst in die radialen Rippenkanäle (24). Der Flußweg der Spritzgußmasse ist mit Pfeilen (29) gekennzeichnet. Die Spritzgußmasse füllt dann sämtliche radialen Rippenkanäle (24) aus, wobei die Spritzgußmasse in den Rippenkanälen, die keinen Angußkanal (23) bzw. keine Angußöffnung (28) aufweisen, radial von innen nach außen strömt. Dies ist durch die entsprechenden Pfeile (29) dargestellt.

Die Spritzgußmasse (13) gelangt von den radialen Rippenkanälen (24) über die zylindrische Aussparung (25) in den Ringspalt (26) zwischen angußnahem Spritzguß-Formeinsatz (15) und Rotorwelle (11) sowie einem Ringspalt (30) zwischen einer Blechpaket-Innenbohrung (38) und der Rotorwelle (11).

Der stirnseitige Formeinsatz (17) im angußfernen Bereich ist in seiner Formgebung mit radialen Angußkanälen (31) analog zum angußnahen Formeinsatz (15) ausgebildet. Die Spritzgußmasse (13) gelangt deshalb vom angußnahen Bereich über den Formeinsatz (15) durch den Ringspalt (30) zum angußfernen stirnseitigen Formeinsatz (17). Hierdurch werden radiale Rippen (32) und (33) aus Kunststoff an radialen Stegen (39) (s. Fig. 3) an den beiden Stirnebenen (20, 20') des Blechpakets (12) gebildet. Diese aus Kunststoff gebildeten rippenförmigen Stege (32, 33) sind geringfügig schmäler als die Breite der radialen Stege (39) des Blechpakets (12).

Zumindest jeder zweite Angußkanal (31) im angußfernen Bereich weist einen schematisch dargestellten Entlüftungskanal (34) auf.

Die Rotorwelle (11) ist im vorderen Bereich im Ringspalt (26) mit Spritzgußmasse (35), im hinteren Ringspalt (36) mit Spritzgußmasse (37) ummantelt. Der in der Fig. 1 dargestellte dunkle Bereich stellt deshalb die Spritzgußmasse insgesamt zur Ummantelung des Rotors (10) dar.

Das Herstellungsverfahren des Rotors wird maßgeblich dadurch beeinflußt, daß gleichzeitig in einer Bearbeitungsstation und in einer Beschickungsstation gearbeitet wird. Üblicherweise erfolgt der Bearbeitungsablauf derart, daß die Spritzgußform geöffnet wird, die bereits bearbeiteten Teile entnommen und die neu zu bearbeitenden Teile danach eingelegt werden. Während dieser Entnahme- und Neubeschickungszeit kann die Maschine keinen Arbeitstakt ausführen. Die Entnahme- und Neubeschickungszeit kann beispielsweise 10 bis 30 Sek. betragen. Weiterhin beträgt die Füllphase des Spritzgußvorgangs bei Duroplast beispielsweise 10 bis 15 Sek., die danach folgende Aushärtzeit des Duroplast beispielsweise ca. 60 Sek.

Zweckmäßigerweise wird nun die Arbeitsphase, bestehend aus Füllphase und Aushärtzeit dazu verwendet, die Entnahme bzw. Beschickung des Spritzgußwerkzeugs in einer weiteren "Beschickungsstation" durchzuführen. Die bei Duroplasten doch sehr lange Aushärtzeit kann demnach in der anderen Station zeitlich optimal ausgenutzt werden. Der Wechselvorgang zwischen Arbeitsstation und Beschickungsstation erfolgt revolverkopfartig mittels eines Drehtellers. Dies ergibt eine gleichmäßige, kalkulierbare Taktzeit des Arbeitsablaufes, da die Beschickung des Werkzeugs bequem während der Füllphase und der Aushärtzeit vorgenommen werden kann, d. h. die Entnahme des fertigen Teils sowie das Einlegen des neuen Teils kann in Ruhe außerhalb der Bearbeitungsstation erfolgen. Dies ist im Zusammenhang mit der Bearbeitung von Duroplasten ein entscheidender Fortschritt.

**Patentansprüche**

1. Verfahren zur Herstellung eines Rotors für Elektromotoren, wobei ein Blechpaket mit einer dieses durchdringenden Rotorwelle in einer Spritzgußform angeordnet und mit Spritzgußmasse derart umspritzt wird, daß das Blechpaket an beiden Stirnseiten radial verlaufende, sternförmig angespritzte Rippenstege aufweist, dadurch gekennzeichnet, daß die Spritzgußmasse (13, 32, 33, 35, 37) im angußnahen Bereich dem Rotor (10) über einen unmittelbar im Bereich des Blechpakets (12) angeordneten Ringkanal (21) im Spritzgußwerkzeug (15) zugeführt wird, wobei das stirnseitig zum Blechpaket angeordnete Spritzgußwerkzeug (15) mit dem Ringkanal (21) verbundene, radial verlaufende Rippenkanäle (24) aufweist.

2. Verfahren nach Anspruch 1, dadurch gekennzeichnet, daß während des Herstell- und Aushärtvorganges in der Spritzgußmaschine in einer davor geschalteten Beschickungs-Station die Entnahme des fertigen Teils und die Beschickung mit neuen Teilen für die Spritzgußmaschine erfolgt.

3. Verfahren nach Anspruch 2, dadurch gekennzeichnet, daß der Wechselvorgang zwischen Arbeitsstation und Beschickungsstation über einen Drehteller revolverkopfartig erfolgt.

4. Spritzgußwerkzeug zur Herstellung eines mit Spritzgußmasse umgebenen Rotors für Elektromotoren, wobei ein Blechpaket (12) mit einer dieses durchdringenden Rotorwelle (11) in einer Spritzgußform (14 bis 18) angeordnet und mit Spritzgußmasse (13) derart umspritzt ist, daß das Blechpaket (12) an beiden Stirnebenen (20, 20′) radial verlaufende, sternförmig angespritzte Rippenstege aufweist, dadurch gekennzeichnet, daß die Spritzgußform (14 bis 18) in der angußnahen Stirnebene (20) des Blechpaktes (12) als Werkzeug-Trennebene (19) auftrennbar ist, wobei ein stirnseitig zum Blechpaket (12) angeordneter Formeinsatz (15) der Spritzgußform (14 bis 18) einen Ringkanal (21) sowie hiermit verbundene, radial verlaufende Rippenkanäle (24) aufweist.

5. Spritzgußwerkzeug nach Anspruch 4, dadurch gekennzeichnet, daß neben der Werkzeug-Trennebene (19) in der angußnahen Stirnebene (20) des Blechpaktes (12) eine weitere Werkzeug-Trennebene (19′) in der angußfernen Stirnebene (20′) vorgesehen ist, wobei die erste Trennebene (19) durch einen, zum Ringkanal (21) führenden Angußtunnel (22) sowie durch den Ringkanal (21) selbst führt und wobei beide Werkzeug-Trennebenen (19, 19′) durch die jeweils vorgesehenen radialen Rippenkanäle (24, 31) verlaufen.

6. Spritzgußwerkzeug nach Anspruch 4 oder 5, dadurch gekennzeichnet, daß Entlüftungskanäle (34) in jedem zweiten radialen Rippenkanal (31) in der angußfernen Trennebene (19′) vorgesehen sind.

7. Spritzgußwerkzeug nach einem der Ansprüche 4 bis 6, dadurch gekennzeichnet, daß jeder zweite oder dritte radiale Rippenkanal (24) in der angußnahen Werkzeug-Trennebene (19) einen weiteren Angußkanal (23) mit Angußöffnung (28) zum Zuführen von Spritzgußmasse vom Ringkanal (21) aufweist und daß die übrigen Rippenkanäle über diese radial nach innen mit Spritzgußmasse beaufschlagten Rippenkanäle durch radiales nach außen Strömen beaufschlagbar sind.

8. Spritzgußwerkzeug nach einem der Ansprüche 4 bis 7, dadurch gekennzeichnet, daß die an den Stirnebenen (20, 20′) des Blechpakets (20) vorgesehenen radialen Rippenkanäle (24, 31) in den zugehörigen Formeinsätzen (15, 17) an die Rippen des Blechpakets (12) und damit an die herzustellenden Kunststoffrippen (32, 33) angepaßt sind und daß wenigstens ein Teil der radialen Rippenkanäle (24) in der angußnahen Trennebene (19) mit dem, diese Rippenkanäle (24) umgebenden Ringkanal (21) verbunden sind.

9. Spritzgußwerkzeug nach Anspruch 5, dadurch gekennzeichnet, daß sowohl die radialen Rippenkanäle (24, 31) als auch die im angußnahen Bereich angeordneten Angußkanäle (23) mit Angußöffnungen (28), die mit dem Ringkanal (21) verbunden sind, in jeweils zugeordneten Werkzeug-Trennebenen (19, 19′) der Spritzgußform (14 bis 18) angeordnet sind.

**Claims**

1. A method of producing a rotor for electric motors, a stack of sheets with a rotor shaft passing through them being placed in an injection casting mould and having an injection moulding composition so injected around them that the stack of sheets has at both end faces radially extending integrally moulded stellate patterns of ribs, characterised in that in the region close to the sprue, the injection moulding composition (13, 32, 33, 35, 37) is fed to the rotor (10) through an annular passage (21) in the injection moulding tool (15) and disposed directly in the region of the stack of sheets (12), the injection moulding tool (15) which is disposed with its end face towards the stack of sheets has radially extending rib-like passages (24) which are connected to the annular passage (21).

2. A method according to claim 1, characterised in that during the production and hardening-out process in the injection moulding machine, removal of the finished part and loading with new parts for the injection molding machine are accomplished in a loading station which precedes the injection moulding machine.

3. A method according to claim 2, characterized in that the process of change-over between work station and loading station is performed by means of a rotary table, in the manner of a turret head.

4. An injection moulding tool for producing a rotor for electric motors, a stack (12) of sheets with a rotor shaft (11) passing through them being placed in an injection casting mould (14 to 18) and having an injection moulding composition (13) so injected around them that the stack (12) of sheets has at both ends (20, 20′) radially extending integrally moulded stellate patterns of ribs, characterised in that the injection casting mould (14 to 18) is adapted to be opened up in the plane (20) of the stack (12) of sheets close to the sprue as a tool separation plane (19), a mould insert (15) of the injection casting mould (14 to 18) which is disposed with its end face towards the stack (12) of sheets comprises an annular passage (21) and also radially extending rib-like passages (24) connected thereto.

5. An injection moulding tool according to claim 4, characterized in that beside the tool separation plane (19) in the end plane (20) of the stack (12) of sheets which is close to the sprue there is a further tool separation plane (19′) in the end plane (20′) which is remote from the sprue, the first plane of separation (19) extending through a sprue tunnel (22) leading to the annular passage (21) and through the annular passage (21) itself, both tool separation planes (19, 19′) extending through the radial rib-like passages (24, 31).

6. An injection moulding tool according to claim 4 or 5, characterized in that vent passages (34) in each second radial rib-like passage (31) are provided in the plane of separation (19′) which is remote from the sprue.

7. An injection moulding tool according to one of claims 4 to 6, characterized in that every second or third radial rib-like passage (24) in the tool separation plane (19) which is remote from the sprue has a further sprue passage (23) with a sprue aperture (28) for feeding injection moulding composition from the annular passage (21) and in that the other rib-like passages can be supplied by radial outwards flow through these rib-like passages which are supplied radially inwardly with injection moulding composition.

8. An injection moulding tool according to one of claims 4 to 7, characterised in that the radial rib-like passages (24, 31) in the associated mould inserts (15, 17) and provided at the end planes (20, 20′) of the stack of sheets (20 - sic !) are adapted to the ribs of the stack (12) of sheets and thus to the synthetic plastics ribs (32, 33) which are to be produced and in that at least one part of the radial rib-like passages (24) in the plane of separation (19) which is close to the sprue are connected to the annular passage (21) surrounding these rib-like passages (24).

9. An injection moulding tool according to claim 5, characterised in that both the radial rib-like passages (24, 31) and also the sprue passages (23) disposed in the area close to the sprue have sprue apertures (28) which are connected to the annular passage (21) and which are disposed in respectively associated tool separation planes (19, 19′) of the injection casting mould (14 to 18).

**Revendications**

1. Procédé pour la fabrication d'un rotor pour des moteurs électriques, un empilage de tôles avec un arbre de rotor le traversant étant agencé dans un moule d'injection et une masse d'injection étant injectée autour de celui-ci, de sorte que l'empilage de tôles présente, sur ses deux faces frontales, des nervures injectées en étoile, s'étendant radialement, caractérisé en ce que la masse d'injection (13,32,33,35,37) est amenée au rotor (10), dans la zone à proximité de l'entrée d'injection, par l'intermédiaire d'un canal annulaire (21), agencé directement dans la zone de l'empilage de tôles (12), dans le dispositif d'injection (15), le dispositif d'injection (15), agencé frontalement à l'empilage de tôles, présentant des canaux (24) pour les nervures, s'étendant radialement et reliés au canal annulaire (21).

2. Procédé selon la revendication 1, caractérisé en ce que, pendant le processus de fabrication et de durcissement dans la machine d'injection, l'extraction de la pièce terminée et le chargement de nouvelles pièces pour la machine d'injection ont lieu dans un poste de chargement disposé en amont de la machine.

3. Procédé selon la revendication 2, caractérisé en ce que le passage du poste de travail au poste de chargement, et réciproquement, est effectué grâce à un plateau tournant du type tourelle revolver.

4. Dispositif d'injection pour fabriquer un rotor, entouré d'une masse injectée, pour des moteurs électriques, un empilage de tôles (12) avec un arbre de rotor (11) le traversant étant agencé dans un moule d'injection (14 à 18) et une masse d'injection (13) étant injectée autour de celui-ci, de sorte que l'empilage de tôles (12) présente, sur les deux plans frontaux (20,20′), des nervures injectées en étoile, s'étendant radialement, caractérisé en ce que le moule d'injection (14 à 18) est séparable dans le plan frontal (20), proche de l'entrée d'injection, de l'empilage de tôles (12), en tant que plan de joint (19) du dispositif, une pièce (15), agencée frontalement à l'empilage de tôles (12), du moule d'injection (14 à 18) présentant un canal annulaire (21), ainsi que des canaux pour nervures (24), s'étendant radialement et reliés à celui-ci.

5. Dispositif d'injection selon la revendication 4, caractérisé en ce que, en plus du plan de joint (19) du dispositif dans le plan frontal (20), proche de l'entrée d'injection, de l'empilage de tôles (12), un autre plan de joint (19') est prévu dans le plan frontal (20') éloigné de l'entrée d'injection, le premier plan de joint (19) passant par un tunnel (22) d'entrée d'injection menant au canal annulaire (21), ainsi que par le canal annulaire (21) lui-même, et les deux plans de joint (19,19') s'étendant à travers les canaux radiaux pour nervures (24,31) prévus à chaque fois.

6. Dispositif d'injection selon la revendication 4 ou 5, caractérisé en ce que des canaux d'évent (34) sont prévus dans chaque second canal radial pour nervure (31) dans le plan de joint (19') éloigné de l'entrée d'injection.

7. Dispositif d'injection selon une des revendications 4 à 6, caractérisé en ce que chaque deuxième ou troisième canal radial pour nervure (24), dans le plan de joint (19) proche de l'entrée d'injection, présente un autre canal (23) d'entrée d'injection à ouverture (28), pour l'amenée de la masse d'injection du canal annulaire (21), et en ce que les canaux pour nervures restants peuvent être alimentés par écoulement radial vers l'extérieur, par l'intermédiare de ces canaux pour nervures alimentés en masse d'injection radialement vers l'intérieur.

8. Dispositif d'injection selon une des revendications 4 à 7, caractérisé en ce que les canaux radiaux pour nervures (24,31) prévus sur les plans frontaux (20,20') de l'empilage de tôles (12) dans les pièces correspondantes (15,17) du moule sont adaptés aux nervures de l'empilage de tôles (12) et, ainsi, aux nervures (32,33) de matière synthétique à réaliser, et en ce qu'au moins une partie des canaux radiaux pour nervures (24) sont reliés au canal annulaire (21) entourant ces canaux (24) dans le plan de joint (19) proche de l'entrée d'injection.

9. Dispositif d'injection selon la revendication 5, caractérisé en ce qu'aussi bien les canaux radiaux pour nervures (24,31) que les canaux (23) d'entrée d'injection, disposés dans la zone proche de l'entrée d'injection, à ouvertures (28), qui sont reliées au canal annulaire (21), sont disposés dans les plans de joint (19,19') à chaque fois associés du moule d'injection (14 à 18).

FIG. 1

FIG. 3

FIG. 2

EP 0 243 875 B1